# FASCICULE DE BREVET EUROPEEN

(11) **EP 1 268 204 B1**
(45) Date de publication et mention de la délivrance du brevet: **02.06.2004**
(21) Numéro de dépôt: 01911850.4
(22) Date de dépôt: 06.03.2001
(51) Int. Cl.: B32B 27/34, F16L 11/04

(54) **CONDUITE BICOUCHE**
ZWEISCHICHTIGES ROHR
DOUBLE-LAYER PIPE

(30) Priorité: 10.03.2000 FR 0003088
(43) Date de publication de la demande: 02.01.2003
(73) Titulaire: NOBEL PLASTIQUES, 92000 Nanterre (FR)
(72) Inventeur: JUNG, Stéphane, 57415 Enchenbery (FR)
(74) Mandataire: Lavialle, Bruno
(86) Numéro de dépôt international: PCT/FR2001/000648
(87) Numéro de publication internationale: WO 2001/068366

(56) Documents cités:
- FR-A- 2 602 515
- US-A- 5 474 109
- US-A- 5 662 975
- Encyclopedia of Polymer Science and Engineering, tome 7 (1987); John Wiley & Sons, New York (US); p. 256, 257
- Encyclopedia of Polymer Science and Engineering, tome 2 (1985); John Wiley & Sons, New York (US); p. 400

## Description

La présente invention concerne une conduite de transport de fluide. Cette conduite peut par exemple être implantée dans un circuit de commande d'un embrayage, un circuit de freinage ou un circuit de direction assistée d'un véhicule automobile.

De manière schématique, un système de commande hydraulique d'embrayage comprend généralement une pédale d'actionnement, un émetteur d'un liquide de commande relié à la pédale d'actionnement, un récepteur du liquide de commande relié à l'embrayage lui-même et une conduite de liaison raccordée à l'émetteur et au récepteur pour transporter le liquide de commande entre eux. Une action sur la pédale commande le déplacement d'un piston de l'émetteur qui pousse le liquide vers le récepteur et provoque le déplacement d'un piston du récepteur commandant l'embrayage.

La conduite de liaison doit satisfaire un certain nombre d'exigences pour assurer le bon fonctionnement de la commande d'embrayage. Ainsi, la conduite doit conserver un volume interne constant pour des températures comprises entre -40°C et 150°C et des pressions comprises entre 10 bars et 40 bars de manière qu'un déplacement déterminé de la pédale provoque un déplacement correspondant du piston du récepteur sensiblement constant quelques soient ces conditions de températures et de pression. La conduite doit en outre posséder une résistance à l'éclatement jusqu'à une pression de l'ordre de 200 bars et conserver une flexibilité jusqu'à une température de l'ordre de -50°C environ.

Parmi les autres conditions que doit satisfaire la conduite, l'imperméabilité à l'eau (pour éviter que l'eau ne vienne se mélanger au liquide de commande et en abaisse la température d'ébullition), la tenue au contact occasionnel avec des fluides du type de l'acide de batterie sous forme de vapeur, de l'huile, des solutions salines de déneigement (comme le chlorure de zinc), la résistance au vieillissement thermo-mécanique (provoqué par des variations brusques de pression à différentes températures) sont particulièrement importantes.

Actuellement, les conduites généralement utilisées sont formées d'un tuyau métallique associé à un flexible de caoutchouc tressé. Ces conduites sont toutefois relativement coûteuses (notamment en raison de l'assemblage des deux éléments constituant celles-ci, qui complique également les opérations de contrôle de la qualité de la conduite). En outre, le flexible est perméable à l'eau, ce qui risque de conduire à une corrosion du tuyau métallique. Enfin, ces conduites sont relativement lourdes, ce qui va l'encontre de la tendance ayant cours actuellement dans le milieu automobile visant à réduire au maximum le poids des véhicules.

Un but de l'invention est de fournir une conduite satisfaisant aux conditions précitées et remédiant aux inconvénients ci-dessus énoncés.

En vue de la réalisation de ce but, on prévoit, selon l'invention, une conduite bicouche comprenant une couche interne et une couche externe , la couche interne étant à base de polyamide et la couche externe étant à base de l'un au moins des polymères suivants :
- polyéther ester
- polyester éther
- polymère fluoré

Ainsi, la couche interne en polyamide empêche la déformation de la conduite sous l'effet de la pression et/ou de la température et résiste au fluide transporté. Cette couche interne confère en outre à la conduite une bonne résistance aux autres contraintes mécaniques.

Le polyamide utilisé pour la réalisation de la couche interne est avantageusement un polyamide 6-6.

La couche externe a pour fonction de constituer une couche barrière à l'eau et de protéger la couche interne d'un contact avec les fluides présents dans l'environnement extérieur de la conduite (vapeurs d'acide de batterie, huile et autres hydrocarbures, solutions salines de déneigement...) .

Le polymère fluoré est par exemple un difluorure de polyvinylidène (PVDF) ou un tétrafluoroéthylène hexafluoropropylène vinylidène fluoride (THV, comme celui commercialisé par la société DYNEON). On utilisera par exemple comme polyester éther celui portant la marque ARNITEL de la société DSM ou la marque HYTREL de la société DUPONT DE NEMOURS.

La conduite est par exemple réalisée par coextrusion des matériaux constituant la couche interne et la couche externe.

La conduite réalisée conformément à l'invention constitue un compromis satisfaisant entre toutes les exigences mentionnées précédemment.

Elle possède par ailleurs une bonne flexibilité facilitant son implantation dans le compartiment moteur et autorisant une liberté de débattement en cours de fonctionnement.

De préférence, la couche interne a une épaisseur comprise entre 80 % et 90 % de l'épaisseur totale de la conduite.

Une telle structure procure à la conduite des caractéristiques optimales (résistance mécanique et résistance chimique, flexibilité, imperméabilité, tenue au vieillissement...) pour les applications envisagées.

A titre d'exemple, pour un diamètre interne compris entre 3,5 mm et 4 mm, la conduite aura un diamètre externe compris entre 7 et 8 mm.

Bien entendu, l'invention n'est pas limitée aux modes de réalisation décrits et on peut y apporter des variantes sans sortir du cadre de l'invention tel que défini par les revendications.

En particulier, d'autres applications que celles mentionnées précédemment peuvent être envisagées pour la conduite de l'invention.

En outre, les valeurs numériques mentionnées ne sont données qu'à titre indicatif et la conduite peut être dimensionnée différemment pour répondre à des conditions particulières d'utilisation (par exemple en fonction de la quantité de fluide à recevoir, des pressions de services, des températures d'utilisation...).

## Revendications

1. Conduite bicouche comprenant une couche interne et une couche externe, **caractérisée en ce que** la couche interne est à base de polyamide et **en ce que** la couche externe est à base de l'un au moins des polymères suivants:
- polyéther ester
- polyester éther
- polymère fluoré

2. conduite selon la revendication 1, **caractérisée en ce que** la couche interne a une épaisseur comprise entre 80 % et 90 % de l'épaisseur totale de la conduite.

3. conduite selon la revendication 1 ou la revendication 2, **caractérisée en ce que** pour un diamètre interne compris entre 3,5 mm et 4 mm, la conduite a un diamètre externe compris entre 7 et 8 mm.

4. conduite selon l'une des revendications 1 à 3, **caractérisée en ce que** la couche interne est en polyamide 6-6.

## Patentansprüche

1. Zweischichtige Rohrleitung, umfassend eine Innenschicht und eine Außenschicht, **dadurch gekennzeichnet, dass** die Innenschicht auf der Basis von Polyamid und die Außenschicht auf der Basis von mindestens einem der folgenden Polymere hergestellt ist:
- Polyether-Ester
- Polyester-Ether
- Fluorpolymer.

2. Rohrleitung nach Anspruch 1, **dadurch gekennzeichnet, dass** die Innenschicht eine Stärke zwischen 80 % und 90 % der Gesamtstärke der Rohrleitung hat.

3. Rohrleitung nach Anspruch 1 oder Anspruch 2, **dadurch gekennzeichnet, dass** die Rohrleitung bei einem Innendurchmesser zwischen 3,5 mm und 4 mm einen Außendurchmesser zwischen 7 und 8 mm hat.

4. Rohrleitung nach einem der Ansprüche 1 bis 3, **dadurch gekennzeichnet, dass** die Innenschicht aus Polyamid 6-6 ist.

## Claims

1. A two-layer pipe comprising an inner layer and an outer layer, the pipe being **characterized in that** the inner layer is based on polyamide and **in that** the outer layer is based on at least one of the following polymers:
- polyether ester;
- polyester ether; and
- fluoropolymer.

2. A pipe according to claim 1, **characterized in that** the inner layer has a thickness in the range 80% to 90% of the total thickness of the pipe.

3. A pipe according to claim 1 or claim 2, **characterized in that** for an inside diameter lying in the range 3.5 mm to 4 mm, the pipe has an outside diameter lying in the range 7 mm to 8 mm.

4. A pipe according to any one of claims 1 to 3, **characterized in that** the inner layer is made of 6-6 polyamide.
